# EUROPEAN PATENT APPLICATION

(11) **EP 2 105 676 A2**
(43) Date of publication of application: **30.09.2009**
(21) Application number: 08169055.4
(22) Date of filing: 13.11.2008
(51) Int. Cl.: F24D 13/02

(54) **Electric radiator**

(30) Priority: 28.03.2008 IT MI20080531
(71) Applicant: Ridea S.r.l., 24040 Ciserano (Bergamo) (IT)
(72) Inventor: Foglieni, Olivo, 24040, Ciserano (Bergamo) (IT)
(74) Representative: Ripamonti, Enrico

(57) **Abstract**

The electric radiator (1) comprises a plate (2) associated with at least one electrical resistance unit (3). The electrical resistance unit (3) is of flat shape and is associated with a first face (5) of said plate (2).

## Description

The present invention relates to an electric radiator.

In particular the present invention relates to electric radiators of the type for heating buildings.

Electric radiators are known to be much appreciated as they can be installed without the need to connect them to a hydraulic system, hence avoiding all the complications and constraints which this involves.

Electric radiators are currently in the form of a typically aluminium hollow body containing diathermic oil; one or more electrical resistance units are inserted into the hollow body and connected to an electric feed cable.

During operation, the electrical resistance units are activated and heat the diathermic oil; the diathermic oil circulates through the hollow body of the radiator and heats all its elements.

The radiator elements (heated to a suitable temperature) transfer heat to the surrounding environment, so heating it.

However the structure of traditional radiators is evidently relatively complex.

In this respect, as traditional radiators contain diathermic oil, they have to present a circuit which enables it to circulate, and which must evidently be sealed.

The technical aim of the present invention is therefore to provide an electric radiator by which the stated technical drawbacks of the known art are eliminated.

Within the scope of this technical aim, an object of the invention is to provide an electric radiator of simple structure.

The technical aim together with this and other objects are attained, according to the present invention, by an electric radiator in accordance with claim 1.

Other characteristics of the present invention are defined in the subsequent claims.

Advantageously the radiator of the present invention is able to be constructed very simply in only a short time, as the electrical resistance unit can be inserted easily and quickly into an excavated seat in the plate.

Further characteristics and advantages of the invention will be more apparent from the description of a preferred but non-exclusive embodiment of the electric radiator according to the invention, illustrated by way of non-limiting example in the accompanying drawings, in which:

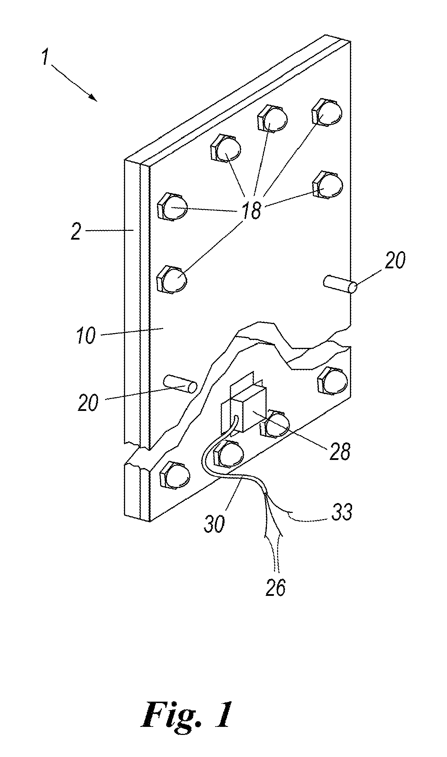

Figure 1 is a rear perspective view of an electric radiator according to the present invention;

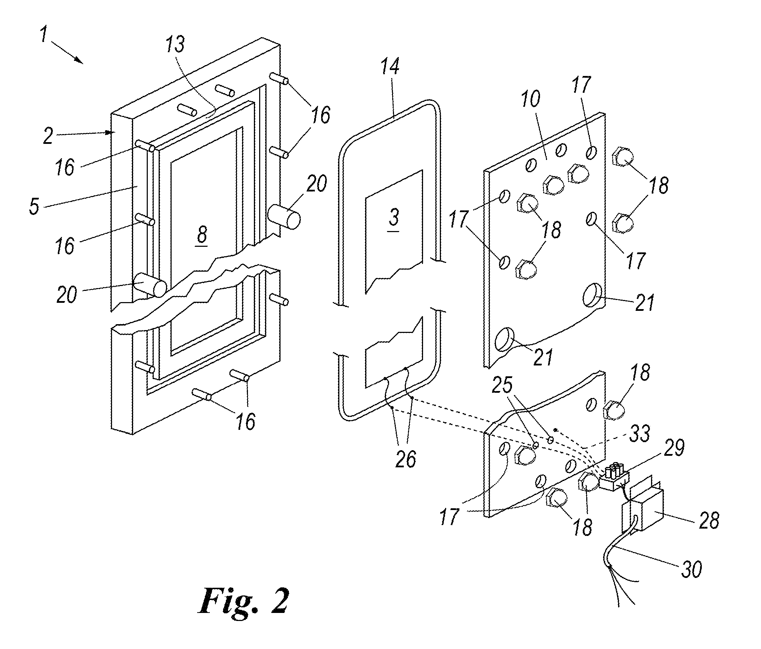

Figure 2 is an exploded view of the electric radiator of Figure 1;

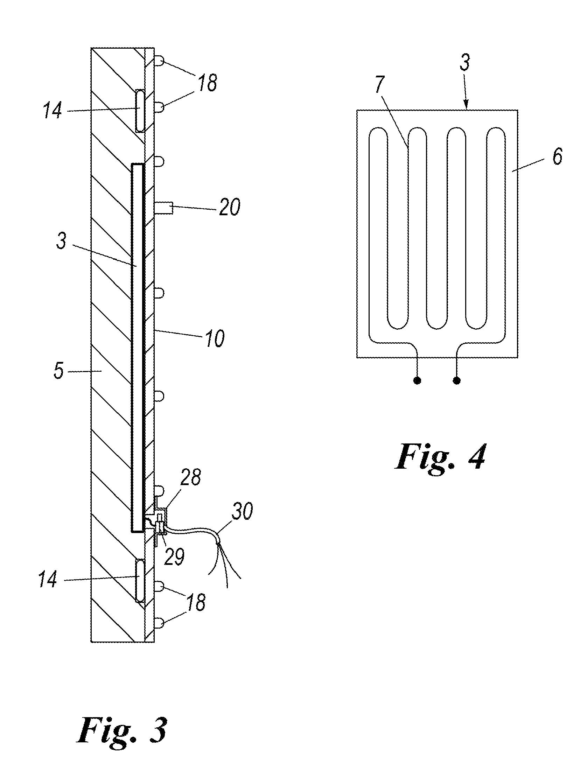

Figure 3 is a longitudinal section through the radiator of the invention; and
Figure 4 is plan view of an electrical resistance unit of the radiator of the invention.

With reference to said figures, these shown an electric radiator indicated overall by the reference numeral 1.

The radiator 1 comprises a plate 2 associated with at least one electrical resistance unit 3.

The electrical resistance unit 3 is of flat shape and is associated with a first face 5 of the plate 2.

Specifically, the electrical resistance unit 3 of flat shape comprises a slab 6 with which a resistive element is associated.

In a first embodiment, the slab 6 comprises a fabric preferably of felt or spun plastic fibres, and the resistive element 7 comprises a wire of suitable electrical resistance, formed of a material such as nickel or copper or copper/nickel alloys, sewn to the fabric.

In a second embodiment, the slab 6 comprises a sheet of paper or cardboard or plastic material, and the resistive element 7 comprises a paint, or carbon fibres, or resistive ink, applied to the sheet.

The plate 2 presents an excavated seat 8 in which the electrical resistance unit 3 is housed.

As shown in the figures, the excavated seat 8 is levelled (i.e. it presents a flat base) and has a depth less than about 2 millimetres and preferably equal to about 1.5 millimetres.

The radiator 1 presents a base panel 10 secured to the first face 5 of the plate 2; this base panel 10 closes the excavated seat 8 and protects the electrical resistance unit contained in it.

The plate 2 also presents a perimetral groove 13 surrounding the excavated seat 8 and containing a gasket 14.

This gasket 14 is interposed between the plate 2 and the panel 10, and comprises a two-component glue or silicone.

A plurality of first threaded pins 16 project from the first face 5 of the plate 2, and are inserted through corresponding holes 17 of the panel 10 and locked by nuts 18.

One or more second pins 20 also project from the first face 5 of the plate 2 and are inserted through corresponding holes 21 of the panel 10, to pass through it and project rearwards from the radiator 1.

The second pins 20 are able to fix the radiator 1 to a wall; for example, the radiator of the illustrated figures presents two pins, however it is apparent that these can also be of a different number, such as one or three, according to requirements.

The panel 10 also presents apertures 25 to allow electric wires 26 powering the electrical resistance unit 3 to emerge from the excavated seat 8.

Advantageously, at the aperture 25 the radiator 1 presents a box piece 28 containing an electrical connector 29 for connecting the electric wires 26 to an electric cable 30.

The cable 30 presents an end inserted into the box piece 28 and locked to the box piece 28 by a cable clamp.

The opposite end of the cable 30 from that inserted into the box piece 28 is free to enable it to be connected to the electric mains.

The cable 30 also presents an earth wire 33 connected to a metal part of the radiator 1; in the illustrated figures the earth wire 33 is connected to the panel 10 inside the box piece 28.

The plate 2 is made of aluminium or aluminium alloy and has a thickness less than 10 millimetres, and preferably about 8 millimetres; the panel 10 is also made of aluminium or aluminium alloy and has a thickness less than 2 millimetres, and preferably about 2 millimetres.

The excavated seat 8 is made by milling the plate 2 and has a depth less than about 2 millimetres, and preferably about 1.5 millimetres; in the same manner the slot 13 is also made by milling the plate 2 and has a depth less than about 2 millimetres, and preferably about 1 millimetre.

The operation of the electric radiator of the invention is apparent from that described and illustrated, and is substantially as follows.

When the radiator is connected to the electric mains and is activated (for example by a wall switch, not shown), the electrical resistance unit 3 heats up and transmits its heat to the plate 2 and to the panel 10.

The plate 2 and the panel 10 then heat the environment in which they are inserted.

The thickness of the excavated seat 8 has been chosen to ensure ideal contact of the electrical resistance unit 3 with the plate 2 and the panel 10; in other words the depth of the excavated seat 8 is substantially equal to the thickness of the electrical resistance unit 3.

Modifications and variants beyond those already stated are evidently possible; hence, the radiator of the invention can be provided with an electrical switch enabling the electrical resistance unit to be activated or deactivated.

Moreover although the description always refers to a single electrical resistance unit 3, it is apparent that the radiator can also be provided with several electrical resistance units 3.

It has been found in practice that the electric radiator of the invention is particularly advantageous because it presents a simple and robust structure.

In practice the materials used and the dimensions can be chosen at will according to requirements and to the state of the art.

## Claims

1. An electric radiator (1) comprising a plate (2) associated with at least one electrical resistance unit (3), **characterised in that** said electrical resistance unit (3) is of flat shape and is associated with a first face (5) of said plate (2).

2. A radiator (1) as claimed in claim 1, **characterised in that** said electrical resistance unit (3) of flat shape comprises an slab (6) with which a resistive element (7) is associated.

3. A radiator (1) as claimed in one or more of the preceding claims, **characterised in that** said slab (6) comprises a fabric preferably of felt or spun plastic fibres, while said resistive element (7) comprises a wire.

4. A radiator (1) as claimed in one or more of the preceding claims, **characterised in that** said slab (6) comprises a sheet of paper or cardboard or plastic material, and said resistive element (7) comprises a paint, or carbon fibres, or resistive ink, applied to said sheet.

5. A radiator (1) as claimed in one or more of the preceding claims, **characterised in that** said plate (2) presents an excavated seat (8), in the interior of which said electrical resistance unit (3) is housed.

6. A radiator (1) as claimed in one or more of the preceding claims, **characterised in that** the depth of the excavated seat (8) is substantially equal to the thickness of the electrical resistance unit (3).

7. A radiator (1) as claimed in one or more of the preceding claims, **characterised in that** said excavated seat (8) is levelled and has a depth less than about 2 millimetres.

8. A radiator (1) as claimed in one or more of the preceding claims, **characterised by** presenting a base panel (10) secured to the first face (5) of the plate (2).

9. A radiator (1) as claimed in one or more of the preceding claims, **characterised in that** said plate (2) presents a perimetral groove (13) surrounding said excavated seat (8) and containing a gasket (14), said gasket (14) being interposed between said plate (2) and said panel (10).

10. A radiator (1) as claimed in one or more of the preceding claims, **characterised in that** said gasket (14) comprises a glue or silicone.

11. A radiator (1) as claimed in one or more of the preceding claims, **characterised in that** a plurality of first threaded pins (16) project from said first face (5) of said plate (2), and are inserted through holes (17) of said panel (10) and locked by nuts (18).

12. A radiator (1) as claimed in one or more of the preceding claims, **characterised in that** at least one second pin (20) projects from said first face (5) of said plate (2) and is inserted through a hole (21) of said panel (10), to pass through it, said at least one second pin (20) being arranged to fix said radiator (1) to a wall.

13. A radiator (1) as claimed in one or more of the preceding claims, **characterised in that** said panel (10) presents apertures (25) to allow electric wires (26) powering said electrical resistance unit (3) to emerge from said excavated seat (8), said radiator (1) presenting at said aperture (25) a box piece (28) containing electrical connectors (29) for connecting said electric wires (26) powering said electrical resistance unit (3) to an electric cable (30) connectable to the electric mains.

14. A radiator (1) as claimed in one or more of the preceding claims, **characterised in that** said plate (2) and said panel (10) are made of aluminium or its alloys.

15. A radiator (1) as claimed in one or more of the preceding claims, **characterised by** being provided with an electrical switch enabling the electrical resistance unit (3) to be activated or deactivated.
